# EUROPÄISCHE PATENTSCHRIFT

(11) **EP 3 119 569 B1**
(45) Veröffentlichungstag und Bekanntmachung des Hinweises auf die Patenterteilung: **09.05.2018**
(21) Anmeldenummer: 15710162.7
(22) Anmeldetag: 13.03.2015
(51) Int. Cl.: B27D 5/00

(54) **VORRICHTUNG ZUM FIXIEREN EINES KANTENMATERIALS**
DEVICE FOR FIXING AN EDGE MATERIAL
DISPOSITIF SERVANT À FIXER UN MATÉRIAU À ARÊTES

(30) Priorität: 19.03.2014 DE 102014103725
(43) Veröffentlichungstag der Anmeldung: 25.01.2017
(73) Patentinhaber: HOLZ-HER GmbH, 72622 Nürtingen (DE)
(72) Erfinder: RAMBACHER, Markus, 71696 Möglingen (DE); HUMMEL, Rainer, 72760 Reutlingen (DE); BURK, Fabian, 72631 Aichtal (DE); LORBER, Denis, 72663 Großbettlingen (DE); LEUZE, Jürgen, 72074 Tübingen (DE); KUHLMANN, Andreas, 19057 Schwerin (DE)
(74) Vertreter: Hoeger, Stellrecht & Partner Patentanwälte mbB
(86) Internationale Anmeldenummer: PCT/EP2015/055286
(87) Internationale Veröffentlichungsnummer: WO 2015/140063

(56) Entgegenhaltungen:
- EP-A1- 2 397 287
- EP-A1- 2 422 947
- EP-A2- 0 945 235
- EP-A2- 1 445 082
- DE-A1- 2 622 074
- GB-A- 2 081 642
- US-A- 3 864 547
- US-A- 4 222 812

## Beschreibung

Die Erfindung betrifft eine Vorrichtung mit den Merkmalen des Oberbegriffes von Patentanspruch 1 zum Fixieren eines band- oder streifenförmigen Kantenmaterials an einer Schmalseite eines plattenförmigen Werkstücks.

Vorrichtungen zum Fixieren eines band- oder streifenförmigen Kantenmaterials kommen beispielsweise bei Kantenbearbeitungsmaschinen zum Einsatz. Bei derartigen Maschinen wird ein plattenförmiges Werkstück, insbesondere eine Holzwerkstück, in einer Transportebene kontinuierlich bewegt, und mit Hilfe einer Fixierungsvorrichtung der voranstehenden genannten Art kann ein band-oder streifenförmiges Kantenmaterial, das häufig auch als "Umleimer" bezeichnet wird, einer parallel zur Transportrichtung des Werkstücks ausgerichteten Schmalseite des Werkstücks zugeführt werden. Das Kantenmaterial weist auf seiner dem Werkstück zugewandten Seite eine aktivierbare Haftschicht auf. Während der Zuführung des Kantenmaterials zur Schmalseite des Werkstücks wird die Haftschicht aktiviert und anschließend wird das Kantenmaterial gegen die Schmalseite des Werkstücks gepresst und dadurch an der Schmalseite fixiert. In vielen Fällen wird das Werkstück anschließend zusammen mit dem an der Schmalseite fixierten Kantenmaterial einer Nachbearbeitung zugeführt, bei der in Transportrichtung über das Werkstück hervorstehende Bereiche des Kantenmaterials vom Werkstück abgetrennt werden.

Vorrichtungen zum Fixieren eines Kantenmaterials an einer Schmalseite eines plattenförmigen Werkstücks sind in vielfältiger Ausgestaltung bekannt. Häufig kommt als Haftschicht des Kantenmaterials ein wärmeaktivierbarer Schmelzkleber zum Einsatz. Der Schmelzkleber kann beispielsweise mit Hilfe unter Druck stehender Heißluft oder auch mit Hilfe einer Plasmabestrahlung aktiviert werden. Derartige Vorrichtungen sind dem Fachmann beispielsweise aus der GB 2 081 642 A, der WO 2012/130224 A1 und der DE 20 2009 009 253 U1 bekannt. Es wurde auch schon vorgeschlagen, ein Kantenmaterial zu verwenden, das aus zwei bevorzugt koextrudierten Kunststoffschichten unterschiedlicher Härte besteht. Eine der Kunststoffschichten bildet eine Haftschicht aus, die durch Beaufschlagung mit Laserstrahlung aktiviert werden kann, um das Kantenmaterial mit dem Werkstück zu verschweißen. Derartige Kunststoffmaterialien sind beispielsweise aus der EP 1 163 864 B1 und der EP 1 852 242 B1 bekannt.

Die Aktivierung der Haftschicht des Kantenmaterials mit Hilfe eines Laserstrahls ist auch aus der DE 10 2006 056 010 B4 bekannt. Sie erfordert allerdings eine konstruktiv aufwändige und kostenintensive Laserquelle und bedarf einer nicht unerheblichen Vorlaufzeit, bevor die Vorrichtung tatsächlich zum Fixieren des Kantenmaterials zum Einsatz kommen kann.

Eine beträchtliche Vorlaufzeit ist auch erforderlich, um die Haftschicht des Kantenmaterials mit Hilfe unter Druck stehender Heißluft oder allgemein mit Hilfe eines unter Druck stehenden Heißgases zu aktivieren. Darüber hinaus ist auch diese Vorgehensweise mit nicht unerheblichen Kosten verbunden.

Entsprechendes gilt auch für die Aktivierung der Haftschicht mit Hilfe einer Plasmabestrahlung. Die Plasmabestrahlung erfordert einen nicht unerheblichen apparativen Aufwand und ist ebenfalls mit einer beachtlichen Vorlaufzeit verbunden, ehe die Haftschicht des Kantenmaterials tatsächlich aktiviert werden kann.

Zur Aktivierung der Haftschicht wurde auch schon der Einsatz eines Infrarotstrahlers vorgeschlagen, beispielsweise in der DE 20 2006 020 669 U1 oder auch in der DE 20 2009 009 253 U1. Infrarotstrahler sind zu Heizzwecken dem Fachmann an sich bekannt. Bei der Bestrahlung des Kantenmaterials mit Infrarotstrahlung ergibt sich allerdings die Schwierigkeit, dass mittels der Infrarotstrahlung lediglich die Haftschicht an der Rückseite des Kantenmaterials aktiviert werden soll, es soll aber die Sichtseite des Kantenmaterials durch die Infrarotstrahlung nicht beeinträchtigt werden.

Aufgabe der vorliegenden Erfindung ist es daher, eine Vorrichtung der gattungsgemäßen Art derart weiterzubilden, dass die Haftschicht des Kantenmaterials mit Hilfe von Infrarotstrahlung prozesssicher aktiviert werden kann, ohne dass die Sichtseite des Kantenmaterials beeinträchtigt wird.

Diese Aufgabe wird durch eine Vorrichtung mit den Merkmalen von Patentanspruch 1 gelöst.

Bei der erfindungsgemäßen Vorrichtung wird die Haftschicht des Kantenmaterials lediglich innerhalb einer vorgebbaren Strahlungsbeaufschlagungszone mit Infrarotstrahlung beaufschlagt. Die Größe der Strahlungsbeaufschlagungszone, also deren geometrische Ausdehnung, ist vorgebbar. Die räumliche Begrenzung der Strahlungsbeaufschlagungszone ermöglicht es auf konstruktiv einfache Weise, die von der Infrarotstrahlung in das Kantenmaterial eingebrachte Energie präzise vorzugeben, so dass durch den Energieeintrag lediglich die Haftschicht aktiviert wird, dass aber keine Beeinträchtigung der Sichtseite des Kantenmaterials erfolgt. Für das präzise Einbringen einer vorgebbaren Energiemenge in das Kantenmaterial ist es von Bedeutung, dass das Kantenmaterial, das durch die Strahlungsbeaufschlagungszone hindurchgeführt wird, innerhalb der Strahlungsbeaufschlagungszone seine Ausrichtung zur Infrarotstrahlung nicht unbeabsichtigt verändert. Erfindungsgemäß weist deshalb die Vorrichtung eine Führungseinrichtung auf, die das Kantenmaterial durch die Strahlungsbeaufschlagungszone hindurchführt. Durch die Führungseinrichtung kann die Ausrichtung des Kantenmaterials innerhalb der Strahlungsbeaufschlagungszone relativ zur Richtung der Infrarotstrahlung vorgegeben werden. Dies ermöglicht es beispielsweise, die Infrarotstrahlung im Wesentlichen senkrecht auf die Haftschicht des Kantenmaterials auszurichten.

Die Führungseinrichtung weist mindestens ein Führungselement auf, das sich in Vorschubrichtung des Kantenmaterials entlang der Strahlungsbeaufschlagungszone erstreckt, wobei das Kantenmaterial entlang des mindestens einen Führungselements bewegbar ist. Das mindestens eine Führungselement stellt innerhalb der Strahlungsbeaufschlagungszone sicher, dass sich die Ausrichtung des Kantenmaterials, insbesondere die Ausrichtung der Haftschicht des Kantenmaterials, innerhalb der Strahlungsbeaufschlagungszone nicht unbeabsichtigt verändert. Das mindestens eine Führungselement erstreckt sich hierzu in Vorschubrichtung des Kantenmaterials entlang der Strahlungsbeaufschlagungszone.

Gemäß der Erfindung weist das mindestens eine Führungselement zumindest einen Kühlkanal für ein Kühlmedium auf. Der Kühlkanal ermöglicht es, das Kühlmedium durch das mindestens eine Führungselement hindurchzuleiten. Dies hat eine besonders wirksame Kühlung des Führungselements zur Folge.

Bei einer besonders bevorzugten Ausgestaltung der Erfindung ist die Größe der Strahlungsbeaufschlagungszone veränderbar. Dies gibt die Möglichkeit, die Größe der Strahlungsbeaufschlagungszone an die Größe des Kantenmaterials, also insbesondere an dessen Ausdehnung in vertikaler Richtung anzupassen. Darüber hinaus kann durch eine Veränderung der Länge der Strahlungsbeaufschlagungszone der Energieeintrag verändert werden, der durch Beaufschlagung der Haftschicht mit Infrarotstrahlung innerhalb der Strahlungsbeaufschlagungszone erzielt werden kann. Durch eine Veränderung der Größe der Strahlungsbeaufschlagungszone kann somit eine Anpassung der erfindungsgemäßen Vorrichtung an unterschiedliches Kantenmaterial, insbesondere an unterschiedliche Haftschichten, erfolgen, ohne dass die von dem mindestens einen Infrarotstrahler abgegebene Infrarotstrahlung beispielsweise in ihrer Intensität und/oder ihrer Wellenlänge verändert werden muss.

Von Vorteil ist es, wenn die Strahlungsbeaufschlagungszone von einem Gehäuse mit einem Eingang zum Einführen des Kantenmaterials und einem Ausgang zum Herausführen des Kantenmaterials umgeben ist. Das Gehäuse gibt die Ausdehnung der Strahlungsbeaufschlagungszone vor und schützt den Benutzer der Vorrichtung vor Infrarotstrahlung. Sicherheitsanforderungen, die sich aus dem Einsatz der Infrarotstrahlung ergeben, können somit auf konstruktiv einfache Weise erfüllt werden.

Von Vorteil ist es, wenn das mindestens eine Führungselement das Kantenmaterial linienförmig kontaktiert, wobei das mindestens eine Führungselement eine Kehlnut aufweist, die einen Randbereich des Kantenmaterials aufnimmt. Der linienförmige Kontakt verhindert eine Beeinträchtigung des Führungselements durch die Haftschicht. Auf ihrem Weg durch die Strahlungsbeaufschlagungszone wird die Haftschicht mit Infrarotstrahlung beaufschlagt und daher zunehmend aktiviert. Je größer der Aktivierungsgrad der Haftschicht ist, desto mehr muss darauf geachtet werden, dass die zumindest teilweise bereits aktivierte Haftschicht nicht großflächig mit dem mindestens einen Führungselement in Kontakt gelangt. Ein großflächiger Kontakt wird durch die linienförmige Kontaktierung verhindert.

Die Kehlnut kann beispielsweise einen halbkreisförmigen oder V-förmigen Querschnitt aufweisen. Das Kantenmaterial kann mit einem Randbereich, insbesondere mit einem bezogen auf die Vertikale unteren Randbereich, in die Kehlnut eintauchen, wobei sie die Wand der Kehlnut nur linienförmig berührt und etwaige Veränderungen der Materialstärke des Kantenmaterials die linienförmige Berührung nicht beeinträchtigen. Schwankungen der Materialstärke des Kantenmaterials führen somit ebenso wenig zu einer Beeinträchtigung der linienförmigen Berührung wie der Einsatz unterschiedlicher Kantenmaterialien, die sich in ihrer Materialstärke unterscheiden.

Das mindestens eine Führungselement erstreckt sich entlang der Strahlungsbeaufschlagungszone und ist daher der Infrarotstrahlung ausgesetzt. Es ist von Vorteil, wenn das mindestens eine Führungselement mittels eines zwangsgeführten Kühlmediums gekühlt werden kann, beispielsweise mit Hilfe von Kühlluft oder mit Hilfe einer Kühlflüssigkeit.

Zur Kühlung des Führungselements kann beispielsweise Kühlwasser zum Einsatz kommen.

Bevorzugt ist das mindestens eine Führungselement als Führungsschiene ausgestaltet, die eine in Vorschubrichtung des Kantenmaterials ausgerichtete Begrenzung der Strahlungsbeaufschlagungszone ausbildet. Die Strahlungsbeaufschlagungszone, innerhalb derer das Kantenmaterial mit Infrarotstrahlung beaufschlagt werden kann, wird somit zumindest teilweise von der mindestens einen Führungsschiene begrenzt. Die Führungsschiene übernimmt somit nicht nur die Funktion, das Kantenmaterial durch die Strahlungsbeaufschlagungszone hindurchzuführen, sondern sie bildet gleichzeitig auch eine Begrenzung der Strahlungsbeaufschlagungszone.

Von besonderem Vorteil ist es, wenn die Führungseinrichtung zwei im Abstand zueinander angeordnete Führungselemente aufweist, die sich entlang der Strahlungsbeaufschlagungszone erstrecken, wobei das Kantenmaterial entlang der beiden Führungselemente bewegbar ist. Die beiden Führungselemente können jeweils eine Führungsschiene ausbilden und das Kantenmaterial kann entlang der Führungsschienen verschoben werden. Der Vorschub des Kantenmaterials kann durch die Vorschubeinrichtung erzielt werden und der Einsatz der beiden Führungsschienen stellt sicher, dass das Kantenmaterial innerhalb der Strahlungsbeaufschlagungszone seine Ausrichtung zur Infrarotstrahlung nicht unbeabsichtigt ändert.

Besonders günstig ist es, wenn die beiden Führungselemente eine untere und eine obere Führungsschiene ausbilden, die einen unteren Rand und einen oberen Rand des Kantenmaterials vorzugsweise linienförmig kontaktieren.

Wie bereits erwähnt, ist es günstig, wenn die Führungsschienen jeweils eine Kehlnut aufweisen. Die Kehlnut hat bevorzugt einen halbkreisförmigen oder V-förmigen Querschnitt und nimmt einen Randbereich des Kantenmaterials auf, wobei das Kantenmaterial die Kehlnut lediglich linienförmig kontaktiert.

Bei einer vorteilhaften Ausgestaltung der Erfindung bilden die beiden Führungselemente eine obere und eine untere Begrenzung der Strahlungsbeaufschlagungszone aus, wobei die Begrenzungen parallel zum Vorschubweg des Kantenmaterials ausgerichtet sind. Die Führungselemente können jeweils ein Gehäuseteil ausbilden, das die Strahlungsbeaufschlagungszone umgibt.

Der Abstand zwischen den beiden Führungselementen ist bei einer bevorzugten Ausgestaltung der Erfindung veränderbar, insbesondere motorisch veränderbar. Dies gibt die Möglichkeit, Kantenmaterial mit unterschiedlicher vertikaler Ausdehnung durch die Strahlungsbeaufschlagungszone hindurchzuführen. Der Abstand zwischen den beiden Führungselementen kann hierzu an die Ausdehnung des Kantenmaterials angepasst werden. Insbesondere kann vorgesehen sein, dass der Abstand der Führungselemente mit Hilfe eines Motors, beispielsweise eines Elektromotors, oder auch mit Hilfe eines Kolben-Zylinderaggregats verändert werden kann.

Es kann beispielsweise vorgesehen sein, dass zumindest eines der Führungselemente an einem in vertikaler Richtung verschiebbaren Schlitten angeordnet ist. Der Schlitten kann mit Hilfe eines Elektromotors, beispielsweise eines Stellmotors, oder auch mit Hilfe eines Kolben-Zylinderaggregats in vorgebbarer Weise verschoben werden.

Bei einer vorteilhaften Ausgestaltung der Erfindung ist die Strahlungsbeaufschlagungszone auf ihrer dem mindestens einen Infrarotstrahler abgewandten Seite von mindestens einem Absorberelement begrenzt. Das Absorberelement stellt sicher, dass die Infrarotstrahlung auch dann nicht unbeabsichtigt aus der Strahlungsbeaufschlagungszone heraustreten kann, wenn sich kein Kantenmaterial in der Strahlungsbeaufschlagungszone befindet. Bei fehlendem Kantenmaterial wird die Infrarotstrahlung größtenteils vom Absorberelement absorbiert.

Das Absorberelement ist günstigerweise plattenförmig ausgestaltet.

Von Vorteil ist es, wenn das Absorberelement mit Hilfe eines zwangsgeführten Kühlmediums gekühlt werden kann, beispielweise mittels Druckluft oder mit Hilfe einer Kühlflüssigkeit, insbesondere mit Hilfe von Kühlwasser. Die Bereitstellung des Kühlmediums stellt sicher, dass auch bei fortdauerndem Einsatz der erfindungsgemäßen Vorrichtung keine unzulässige Erwärmung des Absorberelements eintritt.

Das Absorberelement kann beispielsweise mindestens einen Kühlkanal für ein Kühlmedium aufweisen. Das Kühlmedium, beispielsweise Kühlwasser, kann durch den Kühlkanal hindurchgeleitet werden, um das Absorberelement wirkungsvoll zu kühlen.

Wie bereits erwähnt, weist die Führungseinrichtung bevorzugt mindestens ein Führungselement auf. Hierbei ist es günstig, wenn an der der Strahlungsbeaufschlagungszone abgewandten Rückseite des Absorberelements eine Verstelleinrichtung gehalten ist zum Verstellen der Position des Führungselements. Als Verstelleinrichtung kann beispielsweise der voranstehend bereits erwähnte Schlitten zum Einsatz kommen.

Die Strahlungsbeaufschlagungszone ist auf ihrer dem mindestens einen Infrarotstrahler zugewandten Seite bevorzugt von einer für Infrarotstrahlung zumindest teiltransparenten Glasplatte begrenzt. Die Glasplatte bildet einen Schutz des mindestens einen Infrarotstrahlers vor Staub und Schmutz aus. Insbesondere stellt die Glasplatte sicher, dass innerhalb der Strahlungsbeaufschlagungszone möglicherweise von der Haftschicht abdampfende Materialien nicht ohne Weiteres zu dem mindestens einen Infrarotstrahler gelangen.

Die Glasplatte ist bei einer vorteilhaften Ausgestaltung auswechselbar an einer Glasplattenhalterung gehalten. Dies gibt dem Benutzer auf einfache Weise die Möglichkeit, die Glasplatte bei Bedarf auszutauschen oder zur Reinigung von der Glasplattenhalterung zu entfernen.

An der der Strahlungsbeaufschlagungszone abgewandten Rückseite des mindestens einen Infrarotstrahlers ist bei einer vorteilhaften Ausführungsform der Erfindung ein Reflektor angeordnet. Der Reflektor stellt sicher, dass Infrarotstrahlung, die von dem mindestens einen Infrarotstrahler in die der Strahlungsbeaufschlagungszone abgewandte Richtung abgegeben wird, auf die Strahlungsbeaufschlagungszone ausgerichtet werden kann. Der Reflektor kann beispielsweise eine ellipsoide oder paraboloide Form aufweisen, durch die die reflektierte Infrarotstrahlung parallelisiert, aufgeweitet oder gebündelt werden kann.

Von besonderem Vorteil ist es, wenn der Reflektor auswechselbar an einer Reflektorhalterung gehalten ist. Dies gibt dem Benutzer die Möglichkeit, den Reflektor an das jeweils zum Einsatz kommende Kantenmaterial anzupassen. Insbesondere gibt dies dem Benutzer die Möglichkeit, die Größe der Strahlungsbeaufschlagungszone zu verändern, indem er den Reflektor ändert.

Um Strahlungsverluste möglichst gering zu halten, ist es günstig, wenn der mindestens eine Infrarotstrahler unmittelbar neben der Strahlungsbeaufschlagungszone angeordnet ist, wobei zwischen der Strahlungsbeaufschlagungszone und dem mindestens einen Infrarotstrahler lediglich eine Glasplatte positioniert ist. Der Abstand zwischen dem mindestens einen Infrarotstrahler und dem durch die Strahlungsbeaufschlagungszone hindurchgeführten Kantenmaterial kann dadurch besonders gering gehalten werden. Strahlungsverluste werden dadurch reduziert, so dass ein möglichst hoher Anteil der vom Infrarotstrahler emittierten Infrarotstrahlung zur Aktivierung der Haftschicht des Kantenmaterials verwendet werden kann.

Alternativ kann vorgesehen sein, dass zwischen dem mindestens einen Infrarotstrahler und der Strahlungsbeaufschlagungszone zumindest ein optisches Bauelement zur Ablenkung, Fokussierung und/oder Aufweitung der von dem mindestens einen Infrarotstrahler emittierten Infrarotstrahlung angeordnet ist. Das mindestens eine optische Bauelement kann beispielsweise als Linse, Prisma oder als Spiegel ausgebildet sein. Das optische Bauelement ermöglicht es, die von dem mindestens einen Infrarotstrahler emittierte Infrarotstrahlung optimal auf die Haftschicht des Kantenmaterials auszurichten.

Das mindestens eine optische Bauelement ist bevorzugt an einem Bauelementeträger auswechselbar gehalten. Dies gibt die Möglichkeit, durch den Einsatz unterschiedlicher optischer Bauelemente die Ausrichtung der Infrarotstrahlung an die Größe des Kantenmaterials und insbesondere an die Größe der jeweiligen Haftschicht anzupassen.

Es kann auch vorgesehen sein, dass die optischen Übertragungseigenschaften von mindestens einem optischen Bauelement, das zwischen dem mindestens einen Infrarotstrahler und der Strahlungsbeaufschlagungszone angeordnet ist, steuerbar sind. Beispielsweise kann vorgesehen sein, dass die Brennweite einer als optisches Bauelement zum Einsatz kommenden Linse verändert werden kann. Die Veränderung der optischen Übertragungseigenschaft kann beispielsweise manuell erfolgen oder durch Beaufschlagung mit einer elektrischen Steuerspannung.

Bei einer vorteilhaften Ausgestaltung der Erfindung ist der mindestens eine Infrarotstrahler relativ zum Vorschubweg des Kantenmaterials verstellbar gehalten. Dies gibt zum Beispiel die Möglichkeit, den Abstand, den der mindestens eine Infrarotstrahler zum Kantenmaterial einnimmt, zu verändern. Alternativ oder ergänzend kann vorgesehen sein, dass die Ausrichtung des mindestens einen Infrarotstrahlers relativ zum Vorschubweg des Kantenmaterials verändert werden kann. Es kann beispielsweise ein stabförmiger, sich im Wesentlichen in Vorschubrichtung erstreckender Infrarotstrahler zum Einsatz kommen, der um eine senkrecht zur Vorschubrichtung ausgerichtete horizontale Schwenkachse verschwenkt werden kann. Dadurch kann die Neigung des stabförmigen Infrarotstrahlers zu einer Horizontalebene verändert werden. Der Neigungswinkel kann an die Höhe des Kantenmaterials, insbesondere an die Höhe der Haftschicht des Kantenmaterials, angepasst werden. Je größer die Haftschicht ist, desto größer wird der Neigungswinkel gewählt, den der Infrarotstrahler zur Horizontalebene einnimmt, so dass die Haftschicht während der Vorschubbewegung des Kantenmaterials innerhalb der Strahlungsbeaufschlagungszone über ihre gesamte Höhe zuverlässig mit Infrarotstrahlung beaufschlagt werden kann.

Das Kantenmaterial ist dem Werkstück kontinuierlich zuführbar, und um das kontinuierlich zugeführte Kantenmaterial an die Länge der Schmalseite des Werkstücks anzupassen, weist die Vorrichtung ein Trennmesser auf zum Abtrennen von Kantenmaterial. Das Kantenmaterial kann beispielsweise als Rollenware bereitgestellt werden und mittels des Trennmessers kann eine gewünschte Länge des Kantenmaterials abgetrennt werden.

Das Trennmesser ist bei einer vorteilhaften Ausgestaltung der Erfindung von dem mindestens einen Infrarotstrahler mechanisch entkoppelt. Dies stellt sicher, dass mechanische Erschütterungen, die beim Abtrennen vom Kantenmaterial vom Trennmesser erzeugt werden, nicht ohne Weiteres auf den mindestens einen Infrarotstrahler übertragen werden. Eine Beeinträchtigung des mindestens einen Infrarotstrahlers durch die vom Trennmesser hervorgerufene mechanische Erschütterung kann dadurch gering gehalten werden.

Um einen sauberen Trennschnitt mit Hilfe des Trennmessers erzielen zu können, ist es von Vorteil, wenn das Trennmesser bezogen auf den Vorschubweg des Kantenmaterials vor dem Eingang der Strahlungsbeaufschlagungszone angeordnet ist. Dies gibt die Möglichkeit, das Kantenmaterial noch abzutrennen, bevor die Haftschicht des Kantenmaterials von der Infrarotstrahlung aktiviert wird. Falls das Trennmesser in einem Bereich des Kantenmaterials einen Trennschnitt vornimmt, in dem die Haftschicht bereits aktiviert wurde, könnte die aktivierte Haftschicht das Trennmesser verschmieren oder durch den Trennschnitt an die Sichtseite des Kantenmaterials gelangen. Das Kantenmaterial wird daher bei einer bevorzugten Ausgestaltung der Erfindung mittels des Trennmessers bereits abgetrennt, noch bevor die Haftschicht aktiviert wird.

Es kann allerdings auch vorgesehen sein, dass das Trennmesser bezogen auf den Vorschubweg des Kantenmaterials hinter einem Ausgang der Strahlungsbeaufschlagungszone angeordnet ist. Das Trennmesser kann hierbei eine Antihaftbeschichtung aufweisen, so dass das Risiko gering gehalten werden kann, dass die aktivierte Haftschicht am Trennmesser anhaftet und über das Trennmesser zur Sichtseite des Kantenmaterials gelangen kann.

Von besonderem Vorteil ist es, wenn die Vorrichtung eine zwischen der Strahlungsbeaufschlagungszone und dem mindestens einen Infrarotstrahler positionierbare Blende aufweist, die zwischen einer Abdeckstellung und einer Freigabestellung hin und her bewegbar ist. In ihrer Abdeckstellung blockiert die Blende den Strahlengang zwischen dem mindestens einen Infrarotstrahler und der Strahlungsbeaufschlagungszone, so dass in die Strahlungsbeaufschlagungszone keine Infrarotstrahlung gelangen kann. Durch Positionieren der Blende in ihre Abdeckstellung kann somit verhindert werden, dass die Haftschicht eines in der Strahlungsbeaufschlagungszone befindlichen Kantenmaterials aktiviert wird. In ihrer Freigabestellung gibt die Blende den Strahlengang zwischen dem mindestens einen Infrarotstrahler und der Strahlungsbeaufschlagungszone frei, so dass die Infrarotstrahlung ungehindert in die Strahlungsbeaufschlagungszone gelangen kann, um die Haftschicht eines in der Strahlungsbeaufschlagungszone befindlichen Kantenmaterials zu aktivieren.

Besonders günstig ist es, wenn die Blende synchron zur Vorschubbewegung des Kantenmaterials in Vorschubrichtung bewegbar ist zum Schutz eines Kantenmaterialbereichs vor Infrarotstrahlung. Bei einer derartigen Ausgestaltung der Erfindung nimmt die Blende zunächst ihre Freigabestellung ein, so dass die Haftschicht von Kantenmaterial, das durch die Strahlungsbeaufschlagungszone hindurchgeführt wird, zuverlässig aktiviert werden kann. Sobald jedoch eine vorgebbare Länge des Kantenmaterials durch die Strahlungsbeaufschlagungszone hindurchgeführt wurde, kann beim weiteren Vorschub von Kantenmaterial ein in Vorschubrichtung hinterer Kantenmaterialbereich vor Infrarotstrahlung geschützt werden, indem die synchron und parallel zum Kantenmaterial bewegbare Blende aus ihrer Freigabestellung in ihre Abdeckstellung überführt wird. Die Blende wird somit zusammen mit dem Kantenmaterial in Vorschubrichtung bewegt. Das Kantenmaterial kann durch die Strahlungsbeaufschlagungszone hindurchgeführt werden und anschließend kann hinter dem Ausgang der Strahlungsbeaufschlagungszone der vor Infrarotstrahlung geschützte Bereich des Kantenmaterials von dem der Infrarotstrahlung ausgesetzten Bereich des Kantenmaterials mittels eines Trennmessers abgetrennt werden, das hinter dem Ausgang der Strahlungsbeaufschlagungszone angeordnet ist. Der vor Infrarotstrahlung geschützte Bereich des Kantenmaterials kann anschließend entgegen der Vorschubrichtung aus der Strahlungsbeaufschlagungszone herausbewegt werden und kann dann anschließend für das Fixieren an der Schmalseite eines anderen Werkstückes wiederverwendet werden, wobei dann die Blende ihre Freigabestellung einnimmt und das Kantenmaterial der Infrarotstrahlung ausgesetzt werden kann. Verluste an Kantenmaterial können somit gering gehalten werden.

Alternativ oder ergänzend zu einer synchron zum Kantenmaterial in Vorschubrichtung bewegbaren Blende kann die erfindungsgemäße Vorrichtung eine Vielzahl von Infrarotstrahlern aufweisen, die entlang des Vorschubwegs des Kantenmaterials angeordnet und synchron zur Vorschubbewegung des Kantenmaterials nacheinander an- und/oder abschaltbar sind. Dies gibt beispielsweise die Möglichkeit, die entlang des Vorschubwegs angeordneten Infrarotstrahler nacheinander synchron zur Bewegung des Kantenmaterials abzuschalten, sobald eine derartige Länge an Kantenmaterial durch die Strahlungsbeaufschlagungszone hindurchgeführt wurde, dass die Schmalseite eines bestimmten Werkstücks vom Kantenmaterial beschichtet werden kann. Somit wird beim Hindurchführen von Kantenmaterial lediglich noch ein in Vorschubrichtung vorderer Bereich des Kantenmaterials mit Infrarotstrahlung beaufschlagt, wohingegen ein hinterer Bereich keine Beaufschlagung mehr erfährt.

Hinter dem Ausgang der Strahlungsbeaufschlagungszone kann der Bereich des Kantenmaterials, der keiner Infrarotstrahlung ausgesetzt wurde, von dem der Infrarotstrahlung ausgesetzten Bereich des Kantenmaterials mittels eines Trennmessers abgetrennt werden. Der nicht mit Strahlung beaufschlagte Bereich kann anschließend entgegen der Vorschubrichtung aus dem Eingang der Strahlungsbeaufschlagungszone herausgezogen und anschließend zur Fixierung an der Schmalseite eines anderen Werkstücks wiederverwendet werden. Der Verlust an Kantenmaterial bei der Aktivierung von dessen Haftschicht mittels Infrarotstrahlung kann somit sehr gering gehalten werden.

Die Intensität der von dem mindestens einen Infrarotstrahler emittierten Infrarotstrahlung ist günstigerweise steuerbar. Dies gibt die Möglichkeit, die Intensität der Infrarotstrahlung an die Haftschicht des jeweils zum Einsatz kommenden Kantenmaterials anzupassen. Kommt beispielsweise eine verhältnismäßig dicke Haftschicht zum Einsatz, so kann die Intensität des mindestens einen Infrarotstrahlers erhöht werden, und bei Einsatz einer verhältnismäßig dünnen Haftschicht kann die Intensität des mindestens einen Infrarotstrahlers reduziert werden.

Die Intensität der emittierten Infrarotstrahlung kann auch an die Absorptionseigenschaften des Kantenmaterials, insbesondere an die Absorptionseigenschaften der Haftschicht angepasst werden. Dies gibt die Möglichkeit, bei einer sehr großen Absorption eine andere Intensität zu wählen als bei einer geringen Absorption.

Von besonderem Vorteil ist es, wenn die Intensität der von dem mindestens einen Infrarotstrahler emittierten Infrarotstrahlung in Abhängigkeit von der Vorschubgeschwindigkeit des Kantenmaterials steuerbar ist. Dies gibt insbesondere die Möglichkeit, bei einer hohen Vorschubgeschwindigkeit eine höhere Intensität zu wählen als bei einer geringen Vorschubgeschwindigkeit. Unabhängig von der Vorschubgeschwindigkeit kann dadurch bei vorgegebener Länge der Strahlungsbeaufschlagungszone derselbe Energieeintrag in die aktivierbare Haftschicht des Kantenmaterials erreicht werden, wenn das Kantenmaterial durch die Strahlungsbeaufschlagungszone hindurchgeführt wird.

Besonders günstig ist es, wenn der mindestens eine Infrarotstrahler in Abhängigkeit vom Bewegungszustand des Kantenmaterials steuerbar ist. Dies gibt die Möglichkeit, den mindestens einen Infrarotstrahler auszuschalten, falls die Bewegung des Kantenmaterials beispielsweise aufgrund einer Störung der Vorschubeinrichtung stoppt. Ein unzulässig hoher Energieeintrag in die Haftschicht des in der Strahlungsbeaufschlagungszone befindlichen Kantenmaterials wird dadurch vermieden.

Die Vorheizzeit des mindestens einen Infrarotstrahlers ist sehr gering. Bevorzugt beträgt die Vorheizzeit etwa 1 Sekunde. Dies gibt die Möglichkeit, den mindestens einen Infrarotstrahler nur dann einzuschalten, wenn das sich bewegende Kantenmaterial eine vorgebbare Stellung relativ zu dem mindestens einen Infrarotstrahler erreicht.

Der mindestens eine Infrarotstrahler und insbesondere dessen elektrische Anschlusskontakte erfahren während des Betriebs der Vorrichtung eine Erwärmung. Es ist deshalb günstig, wenn zumindest die elektrischen Anschlusskontakte des mindestens einen Infrarotstrahlers von einem zwangsgekühlten Kühlmedium kühlbar sind. Dadurch kann bei einem Dauerbetrieb der Vorrichtung eine praktisch gleichbleibende Temperatur vor allem der elektrischen Anschlusskontakte des mindestens einen Infrarotstrahlers erreicht werden. Als Kühlmedium kann beispielsweise Kühlluft zum Einsatz kommen oder auch eine Kühlflüssigkeit.

Es kann vorgesehen sein, dass nicht nur die elektrischen Anschlusskontakte des mindestens einen Infrarotstrahlers von einem zwangsgekühlten Kühlmediums kühlbar sind sondern der komplette Infrarotstrahler. Beispielsweise kann der mindestens eine Infrarotstrahler im Strömungsweg einer Kühlluft positioniert sein.

Bei einer vorteilhaften Ausgestaltung der Erfindung ist der mindestens eine Infrarotstrahler in einem Gehäuse angeordnet, das Kühlkanäle für ein Kühlmedium aufweist.

Günstig ist es, wenn das Gehäuse mindestens einen Kühlluftkanal aufweist, der an ein Gebläse anschließbar ist. Mittels des Gebläses kann in dem mindestens einen Kühlluftkanal eine Kühlluftströmung erzielt werden, unter deren Wirkung zumindest die elektrischen Anschlusskontakte des mindestens einen Infrarotstrahlers gekühlt werden können.

Besonders günstig ist es, wenn der mindestens eine Infrarotstrahler in Abhängigkeit von dem im Kühlluftkanal herrschenden Druck und/oder in Abhängigkeit von der im Kühlluftkanal herrschenden Strömungsgeschwindigkeit der Kühlluft steuerbar ist. Dies gibt die Möglichkeit, den Infrarotstrahler abzuschalten und/oder eine Ingangsetzung des Infrarotstrahlers zu verhindern, sofern keine Kühlluft durch den Kühlluftkanal hindurchströmt. Hierzu kann zum Beispiel ein Strömungswächter zum Einsatz kommen, der den mindestens einen Infrarotstrahler ausschaltet und eine Inbetriebsetzung des mindestens einen Infrarotstrahlers verhindert, falls er im Kühlluftkanal keine Kühlluftströmung erfasst. Es kann auch vorgesehen sein, dass im Kühlluftkanal ein Drucksensor angeordnet ist, der den mindestens einen Infrarotstrahler ausschaltet und eine Inbetriebsetzung des mindestens einen Infrarotstrahlers verhindert, sofern im Kühlluftkanal kein vorgegebenen Unterdruck oder kein vorgegebener Überdruck herrscht. Eine Überhitzung des mindestens einen Infrarotstrahlers aufgrund fehlender Luftkühlung kann dadurch zuverlässig vermieden werden.

Von Vorteil ist es, wenn die elektrischen Anschlusskontakte des mindestens einen Infrarotstrahlers mit mindestens einem Kühlkörper wärmeleitend verbunden sind, der in einem Kühlkanal angeordnet ist. Über den Kühlkörper kann von den elektrischen Anschlusskontakten Wärme abgegeben werden. Die Kühlkörper sind günstigerweise in einem Kühlluftkanal angeordnet, der mit einem Gebläse in Strömungsverbindung steht.

Die nachfolgende Beschreibung vorteilhafter Ausführungsformen der Erfindung dient im Zusammenhang mit der Zeichnung der näheren Erläuterung. Es zeigen:
- Figur 1:: eine perspektivische Darstellung einer ersten vorteilhaften Ausführungsform einer erfindungsgemäßen Vorrichtung zum Fixieren eines Kantenmaterials an einer Schmalseite eines plattenförmigen Werkstücks;
- Figur 2:: eine Draufsicht auf die Vorrichtung aus Figur 1;
- Figur 3:: eine Schnittansicht einer Bestrahlungseinrichtung der Vorrichtung längs der Linie 3-3 in Figur 2;
- Figur 4:: eine teilweise aufgetrennte perspektivische Darstellung der Bestrahlungseinrichtung aus Figur 3;
- Figur 5:: eine Schnittansicht der Bestrahlungseinrichtung längs der Linie 5-5 in Figur 3;
- Figur 6:: eine Schnittansicht entsprechend Figur 3 einer zweiten vorteilhaften Ausführungsform einer erfindungsgemäßen Vorrichtung zum Fixieren von Kantenmaterial;
- Figur 7:: eine perspektivische Teildarstellung einer dritten vorteilhaften Ausführungsform einer erfindungsgemäßen Vorrichtung zum Fixieren von Kantenmaterial und
- Figur 8:: eine Schnittansicht entsprechend Figur 5 einer vierten vorteilhaften Ausführungsform einer erfindungsgemäßen Vorrichtung zum Fixieren von Kantenmaterial.

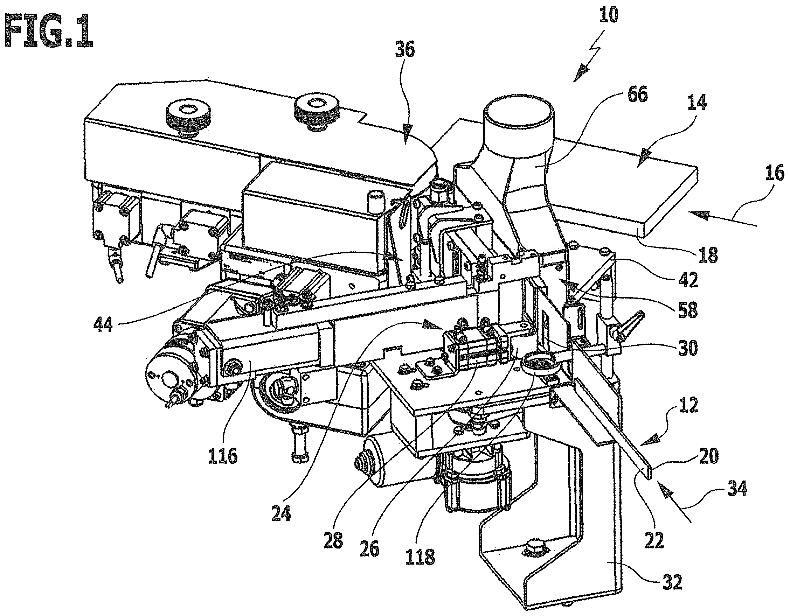

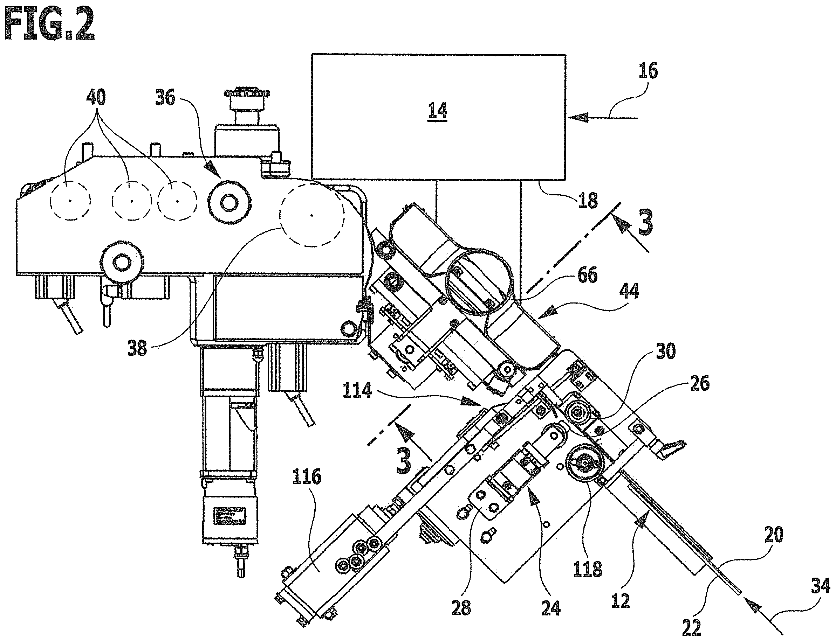

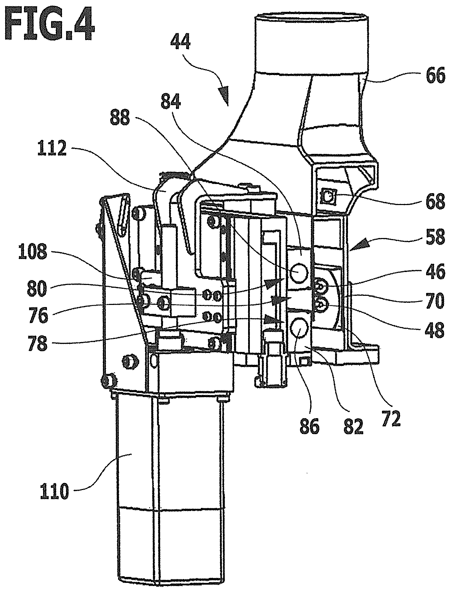

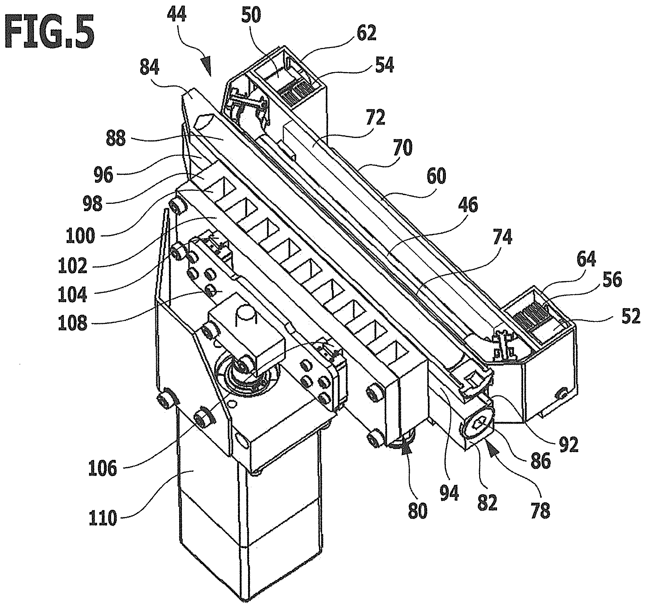

In den Figuren 1 bis 5 ist schematisch eine insgesamt mit dem Bezugszeichen 10 belegte erste vorteilhafte Ausführungsform einer erfindungsgemäßen Vorrichtung dargestellt. Die Vorrichtung 10 ermöglicht es, ein band- oder streifenförmiges Kantenmaterial 12 einem plattenförmigen Werkstück 14, insbesondere einem Holzwerkstück, zuzuführen, das in einer Transportrichtung 16 bewegt wird. Aggregate zum Bewegen des Werkstücks 14 sind in der Zeichnung nicht dargestellt, da sie dem Fachmann an sich bekannt sind.

Das Kantenmaterial 12 kann an einer Schmalseite 18 des Werkstücks 14 fixiert werden. Das Kantenmaterial 12 weist hierzu auf seiner dem Werkstück 14 zugewandten Rückseite eine Haftschicht 20 auf. Auf der dem Werkstück 14 abgewandten Sichtseite 22 des Kantenmaterials 12 ist die Haftschicht 20 nicht erkennbar.

Das Kantenmaterial 12 kann von einer Rollenware, die zur Erzielung einer besseren Übersicht in der Zeichnung nicht dargestellt ist, abgerollt und dem Werkstück 14 mit Hilfe einer Vorschubeinrichtung 24 kontinuierlich zugeführt werden. Die Vorschubeinrichtung 24 weist eine Vorschubrolle 26 auf, die von einem Vorschubmotor 28 in Drehung versetzt werden kann. Die Vorschubrolle 26 wirkt mit einer Gegenrolle 30 zusammen, die an einem ersten Maschinengestell 32 frei drehbar gelagert ist. Mittels der Vorschubrolle 26 und der Gegenrolle 30 kann das Kantenmaterial 12 in einer Vorschubrichtung 34 entlang eines Vorschubwegs von der Vorschubeinrichtung 24 zur Schmalseite 18 des Werkstücks 14 bewegt werden.

Hat das Kantenmaterial 12 die Schmalseite 18 erreicht, so kann es von einer Anpresseinrichtung 36 gegen die Schmalseite 18 gedrückt werden. Die Anpresseinrichtung 36 weist eine Anpressrolle 38 und mehrere der Anpressrolle 38 nachgeordnete Nachpressrollen 40 auf.

Im Bereich zwischen der Vorschubeinrichtung 24 und der Anpresseinrichtung 36 ist an einem zweiten Maschinengestell 42, das vom ersten Maschinengestell 32 mechanisch entkoppelt ist, eine Bestrahlungseinrichtung 44 angeordnet mit einem ersten Infrarotstrahler 46 und einem zweiten Infrarotstrahler 48. Die beiden Infrarotstrahler 46, 48 sind parallel zueinander ausgerichtet und erstrecken sich entlang des Vorschubwegs des Kantenmaterials 12. Der erste Infrarotstrahler 46 ist oberhalb des zweiten Infrarotstrahlers 48 angeordnet. Beide Infrarotstrahler 46, 48 sind stabförrmig ausgestaltet und weisen abgekröpfte, senkrecht zur Vorschubrichtung 34 ausgerichtete elektrische Anschlusselemente 50, 52 auf, die jeweils mit einem Kühlkörper 54, 56 wärmeleitend verbunden sind. Die beiden Infrarotstrahler 46, 48 sind von einem Kühlgehäuse 58 umgeben. Das Kühlgehäuse 58 wird von einem die beiden Infrarotstrahler 46, 48 mit Ausnahme ihrer elektrischen Anschlusselemente 50, 52 aufnehmenden ersten Gehäuseteil 60 und von einem die elektrischen Anschlusselemente 50 aufnehmenden zweiten Gehäuseteil 62 und von einem die elektrischen Anschlusselemente 52 aufnehmenden dritten Gehäuseteil 64 gebildet. Das erste Gehäuseteil 60 bildet ebenso wie das zweite Gehäuseteil 62 und das dritte Gehäuseteil 64 einen Kühlluftkanal aus. Die Kühlkanäle stehen mit einer Absaughaube 66 in Strömungsverbindung. An die Absaughaube 66 kann eine in der Zeichnung zur Erzielung einer besseren Übersicht nicht dargestellte Saugleitung angeschlossen werden, über die die Absaughaube 66 mit einem an sich bekannten und deshalb in der Zeichnung ebenfalls nicht dargestellten Gebläse in Strömungsverbindung steht. Mittels des Gebläses kann eine Kühlluftströmung erzielt werden, die sich durch das erste Gehäuseteil 60 sowie durch das zweite Gehäuseteil 62 und das dritte Gehäuseteil 64 und auch durch die Absaughaube 66 hindurch erstreckt. In der Absaughaube 66 ist ein Drucksensor 68 angeordnet, der mit einer in der Zeichnung nicht dargestellten Steuereinrichtung in elektrischer Verbindung steht. Mittels des Drucksensors 68 kann ein in der Absaughaube 66 herrschender Druck erfasst werden und der Steuereinrichtung ein entsprechendes Steuersignal bereitstellen. Die Steuereinrichtung steuert die Zuführung elektrischer Energie an die beiden Infrarotstrahler 46, 48. Die beiden Infrarotstrahler 46, 48 können nur dann in Betrieb gesetzt werden, wenn in der Absaughaube 66 ein vorgebbarer Unterdruck herrscht. Fällt der Unterdruck ab, so werden die Infrarotstrahler 46, 48 von der Steuereinrichtung abgeschaltet.

Das erste Gehäuseteil 60, das die Infrarotstrahler 46, 48 mit Ausnahme ihrer elektrischen Anschlusselemente 50, 52 aufnimmt, weist eine Rückwand 70 auf, an der ein Reflektor 72 lösbar gehalten ist. Die der Rückwand 70 gegenüberliegende Stirnwand des ersten Gehäuseteils 60 wird von einer für Infrarotstrahlung transparenten Glasplatte 74 gebildet. An die Glasplatte 74 schließt sich eine Strahlungsbeaufschlagungszone 76 unmittelbar an, die in vertikaler Richtung von einer Führungseinrichtung 78 und in horizontaler Richtung von der Glasplatte 74 und von einem Absorberelement 80 begrenzt wird und durch die hindurch das Kantenmaterial 12 von der Vorschubeinrichtung 24 zur Schmalseite 18 des Werkstücks 14 geführt werden kann.

Die Führungseinrichtung 78 weist ein erstes Führungselement in Form einer unteren Führungsschiene 82 und ein zweites Führungselement in Form einer oberen Führungsschiene 84 auf. Die beiden Führungsschienen 82, 84 erstrecken sich in Vorschubrichtung 34 parallel zu den beiden Infrarotstrahlern 46, 48 und sind im Abstand zueinander angeordnet. Die beiden Führungsschienen 82, 84 weisen jeweils einen Kühlwasserkanal 86, 88 auf und können vom Kühlwasser gekühlt werden. Einander zugewandt weisen die Führungsschienen 82, 84 jeweils eine im Querschnitt halbkreisförmige Kehlnut 90, 92 auf, in die das Kantenmaterial 12 mit einem unteren Randabschnitt bzw. einem oberen Randabschnitt eintauchen kann. Die halbkreisförmige Ausgestaltung der Kehlnuten 90, 92 stellt sicher, dass das Kantenmaterial 12 an den Führungsschienen 82, 84 nur linienförmig anliegt.

Die beiden Führungsschienen 82, 84, die Glasplatte 74 und das Absorberelement 80 bilden ein Gehäuse der Strahlungsbeaufschlagungszone 76 aus, das die Strahlungsbeaufschlagungszone 76 mit Ausnahme eines Eingangs 94 und eines Ausgangs 96 umgibt.

Das Absorberelement 80 ist zweiteilig ausgebildet und umfasst eine innere Absorberplatte 98, die den beiden Führungsschienen 82, 84 zugewandt ist und auf ihrer den Führungsschienen 82, 84 abgewandten Rückseite einen mäanderförmigen Kühlwasserkanal 100 trägt, und eine äußere Absorberplatte 102, die
den Kühlwasserkanal 100 abdeckt und mit der inneren Absorberplatte 98 verschraubt ist.

Die äußere Absorberplatte 102 trägt auf ihrer der inneren Absorberplatte 98 abgewandten Rückseite eine Verstelleinrichtung mit einem ersten Führungsprofil 104 und einem zweiten Führungsprofil 106. Die beiden Führungsprofile 104, 106 sind vertikal ausgerichtet und dienen der Lagerung eines Schlittens 108, der von einem Motor 110 entlang der Führungsprofile 104, 106 verschoben werden kann.

Die obere Führungsschiene 84 ist über einen das Absorberelement 80 umgreifenden Haltebügel 112 mit dem Schlitten 108 starr verbunden und kann vom Motor 110 zusammen mit dem Schlitten 108 in vertikaler Richtung verstellt werden. Dies gibt die Möglichkeit, den Abstand, den die obere Führungsschiene 84 zur unteren Führungsschiene 82 einnimmt, an die vertikale Ausdehnung des Kantenmaterials 12 anzupassen.

Durch Verstellen der oberen Führungsschiene 84 kann somit die Ausdehnung der Strahlungsbeaufschlagungszone 76 verändert werden.

Bei der in den Figuren 1 bis 5 dargestellten Ausführungsform ist im Bereich zwischen der Vorschubeinrichtung 24 und der Bestrahlungseinrichtung 44 am ersten Maschinengestell 32 ein Trennmesser 114 angeordnet, das von einer Antriebseinheit 116 senkrecht zur Vorschubrichtung 34 hin und her bewegt werden kann, um das Kantenmaterial 12 abzutrennen.

Wie bereits erwähnt, kann das Kantenmaterial 12, das häufig auch als "Umleimer" bezeichnet wird, der Schmalseite 18 des Werkstücks 14 zugeführt werden. Auf dem Weg zur Schmalseite 18 kann die an der Rückseite des Kantenmaterials 12 angeordnete Haftschicht 20 aktiviert werden, indem sie in der Strahlungsbeaufschlagungszone 76 mit Infrarotstrahlung beaufschlagt wird, die von den beiden Infrarotstrahlern 46, 48 abgegeben wird. Die Intensität der Infrarotstrahlung kann an die Vorschubgeschwindigkeit des Kantenmaterials 12 angepasst werden. Je größer die Vorschubgeschwindigkeit gewählt wird, desto größer kann die Intensität der Infrarotstrahlung gewählt werden.

Der Bewegungszustand des Kantenmaterials 12 kann von einem Bewegungssensor, im dargestellten Ausführungsbeispiel von einem Drehgeber 118, erfasst werden, der auf der dem Trennmesser 114 abgewandten Seite der Vorschubeinrichtung 24 am ersten Maschinengestell 32 drehbar gelagert ist und mit der in der Zeichnung nicht dargestellten Steuereinrichtung der Vorrichtung 10 elektrisch verbunden ist. Der Drehgeber 118 erfasst die Bewegung des Kantenmaterials 12. Solange das Kantenmaterial 12 keine Bewegung ausführt, wird die Energieversorgung der beiden Infrarotstrahler 46, 48 aufgrund des vom Drehgeber 118 bereitgestellten Signals unterbrochen. Die Energieversorgung der Infrarotstrahler 46, 48 wird nur bereitgestellt, wenn der Drehgeber 118 eine Bewegung des Kantenmaterials 12 erfasst.

Während des Betriebs der Vorrichtung 10 werden das Absorberelement 80 sowie die beiden Führungsschienen 82, 84 und das Kühlgehäuse 58 kontinuierlich gekühlt, so dass sich im Dauerbetrieb der Vorrichtung 10 eine im Wesentlichen gleichbleibende Temperatur für das Absorberelement 80, die beiden Führungsschienen 82, 84, das Kühlgehäuse 58 und auch die Infrarotstrahler 46, 48 und deren elektrischen Anschlusselemente 50, 52 einstellt.

In Abhängigkeit vom Absorptionsgrad des jeweils zum Einsatz kommenden Kantenmaterials 12 kann die Intensität der Infrarotstrahler 46, 48 gesteuert werden, so dass sichergestellt ist, dass während der Zeit, in der sich das Kantenmaterial 12 in der Strahlungsbeaufschlagungszone 76 befindet, die Haftschicht 20 zuverlässig aktiviert wird, ohne dass dadurch die Sichtseite 22 des Kantenmaterials 12 beeinträchtigt wird. Die Führung der Kantenmaterials 12 in der Strahlungsbeaufschlagungszone 76 wird durch die beiden Führungsschienen 82, 84 sichergestellt, die das Kantenmaterial 12 lediglich linienförmig berühren.

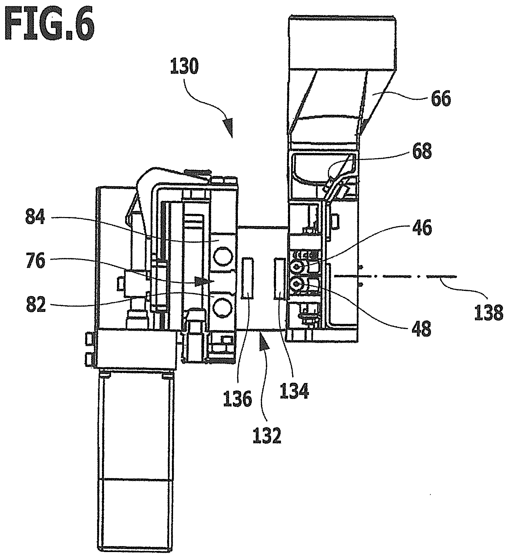

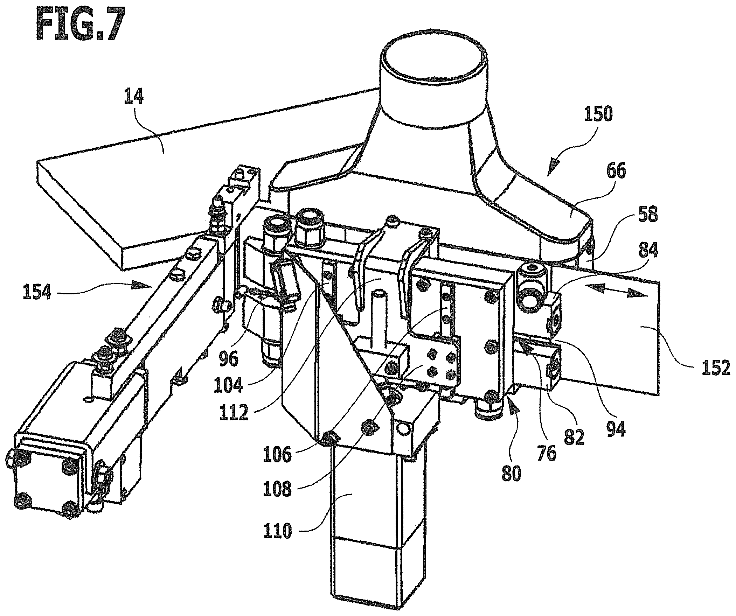

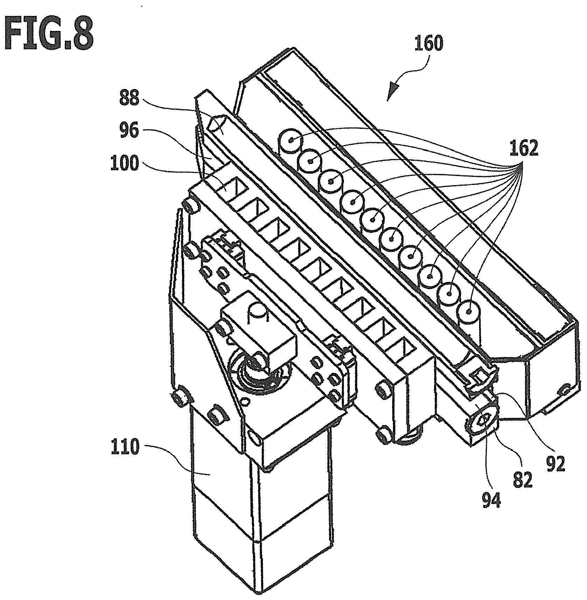

In Figur 6 ist eine zweite vorteilhafte Ausführungsform einer erfindungsgemäßen Vorrichtung zum Fixieren von Kantenmaterial an der Schmalseite eines plattenförmigen Werkstücks auszugsweise dargestellt. Figur 6 zeigt lediglich eine Schnittansicht der bei der zweiten vorteilhaften Ausführungsform zum Einsatz kommenden Bestrahlungseinrichtung, die in Figur 6 insgesamt mit dem Bezugszeichen 130 belegt ist. Die restlichen Komponenten der in Figur 6 dargestellten Vorrichtung sind ebenso wie bei den nachfolgend näher erläuterten vorteilhaften Ausführungsformen, die in den Figuren 7 und 8 dargestellt sind, mit der Vorrichtung 10 identisch, die voranstehend unter Bezugnahme auf die Figuren 1 bis 5 bereits erläutert wurde. Bezüglich dieser Komponenten wird zur Vermeidung von Wiederholungen auf die voranstehenden Ausführungen Bezug genommen.

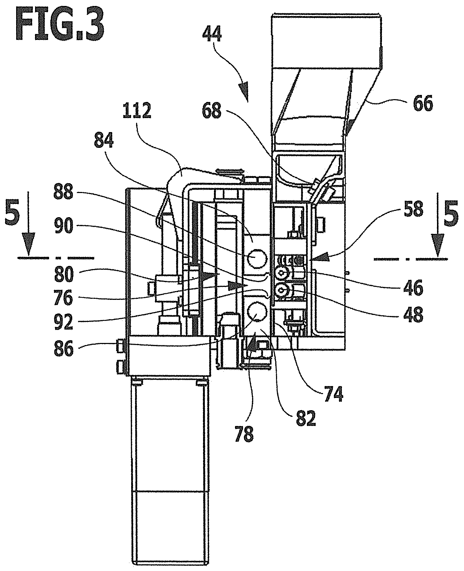

Die Bestrahlungseinrichtung 130 unterscheidet sich von der in Figur 3 dargestellten Bestrahlungseinrichtung 44 dadurch, dass zwischen dem Kühlgehäuse 58, das die beiden Infrarotstrahler 46, 48 aufnimmt, und der Strahlungsbeaufschlagungszone 76 eine optische Übertragungseinrichtung 132 angeordnet ist, mit optischen Bauelementen 134, 136. Mittels der optischen Übertragungseinrichtung 132 kann die in Richtung auf die Strahlungsbeaufschlagungszone 76 von den Infrarotstrahlern 46, 48 emittierte Infrarotstrahlung abgelenkt, fokussiert und/oder aufgeweitet werden. Dies gibt die Möglichkeit, bei einer Änderung des Abstands zwischen den beiden Führungsschienen 82, 84 auch den Strahlengang der von den Infrarotstrahlern emittierten Infrarotstrahlung zu verändern. Wird der Abstand zwischen den Führungsschienen 82, 84 verringert, so kann die Infrarotstrahlung fokussiert werden. Wird der Abstand zwischen den Führungsschienen 82, 84 vergrößert, so kann die Infrarotstrahlung aufgeweitet werden.

Die in Figur 6 dargestellte zweite vorteilhafte Ausführungsform der erfindungsgemäßen Vorrichtung unterscheidet sich von der voranstehend erläuterten Vorrichtung 10 darüber hinaus dadurch, dass das Kühlgehäuse 58 mit den darin angeordneten Infrarotstrahlern 46, 48 um eine senkrecht zur Vorschubrichtung 34 ausgerichtete horizontale Schwenkachse 138 verschwenkt werden kann. Dies gibt die Möglichkeit, die stabförmigen Infrarotstrahler 46, 48 zu einer Horizontalebene zu neigen, so dass sich die Infrarotstrahler 46, 48 im Bereich zwischen den beiden Führungsschienen 82, 84 über eine vergrößerte Höhe erstrecken und dadurch auch Kantenmaterial 12, das sich in vertikaler Richtung über eine verhältnismäßig große Höhe erstreckt, zuverlässig über die gesamte Höhe mit Infrarotstrahlung beaufschlagt werden kann.

In Figur 7 ist eine dritte vorteilhafte Ausführungsform einer erfindungsgemäßen Vorrichtung zum Fixieren von Kantenmaterial an der Schmalseite eines Werkstücks schematisch dargestellt, wobei Figur 7 lediglich eine alternative Ausgestaltung einer insgesamt mit dem Bezugszeichen 150 belegten Bestrahlungseinrichtung und eines Trennmessers 154 zeigt. Wie bereits erwähnt, sind die restlichen Komponenten der dritten vorteilhaften Ausführungsform einer erfindungsgemäßen Vorrichtung identisch mit der in den Figuren 1 bis 5 schematisch bezeichneten Vorrichtung 10. Die Bestrahlungseinrichtung 150 unterscheidet sich von der voranstehend unter Bezugnahme auf die Figuren 1 bis 5 erläuterten Bestrahlungseinrichtung 44 dadurch, dass zwischen dem Kühlgehäuse 58 und der Strahlungsbeaufschlagungszone 76 eine Blende 152 positionierbar ist, die synchron zur Vorschubbewegung des Kantenmaterials 12 zwischen einer Freigabestellung und einer Abdeckstellung hin und her bewegbar ist. Die Blende 152 kann aus ihrer Freigabestellung mittels einer in der Zeichnung nicht dargestellten Antriebseinrichtung, vorzugsweise mittels eines Elektromotors, in Vorschubrichtung 34 in ihre Abdeckstellung bewegt werden. Mittels der Blende 152 kann somit innerhalb der Strahlungsbeaufschlagungszone 76 Kantenmaterial, insbesondere die Haftschicht 20 des Kantenmaterials, vor Infrarotstrahlung geschützt werden. Dies gibt die Möglichkeit, das Kantenmaterial 12 nur über eine derartige Länge rückseitig mit Infrarotstrahlung zu beaufschlagen, wie für das Beschichten der Schmalseite 18 eines bestimmten Werkstücks 14 erforderlich ist. Überschüssiges Kantenmaterial kann innerhalb der Strahlungsbeaufschlagungszone 76 von der Blende 152 abgedeckt werden. Das in der ersten Ausführungsform zwischen der Vorschubeinrichtung 24 und der Bestrahlungseinrichtung 44 angeordnete Trennmesser 114 kann hierbei durch das hinter dem Ausgang der Strahlungsbeaufschlagungszone 76, also im Bereich zwischen der Bestrahlungseinrichtung 150 und dem Werkstück 14, positionierte Trennmesser 154 ersetzt werden. Nachdem das Kantenmaterial die Strahlungsbeaufschlagungszone 76 durchlaufen hat, kann das Kantenmaterial 12 mittels des der Strahlungsbeaufschlagungszone 76 nachgeordneten Trennmessers 154 abgetrennt werden. Überschüssiges Kantenmaterial kann von der Blende 152 abgedeckt werden und kann daher nach dem Abtrennen entgegen der Vorschubrichtung 34 zurückbewegt werden, so dass es für die Beschichtung der Schmalseite eines weiteren Werkstücks verwendet werden kann. Der Verlust an Kantenmaterial kann dadurch besonders gering gehalten werden.

In Figur 8 ist schematisch eine Bestrahlungseinrichtung 160 einer vierten vorteilhaften Ausführungsform einer erfindungsgemäßen Vorrichtung zum Fixieren von Kantenmaterial an der Schmalseite eines Werkstücks dargestellt. Die Bestrahlungseinrichtung 160 unterscheidet sich von der voranstehend unter Bezugnahme auf die Figuren 1 bis 5 beschriebenen Bestrahlungseinrichtung 44 dadurch, dass statt des ersten Infrarotstrahlers 46 und des parallel zum ersten Infrarotstrahlers 46 ausgerichteten zweiten Infrarotstrahlers 48 eine Vielzahl von jeweils vertikal ausgerichteten und in Vorschubrichtung 34 hintereinander angeordneten Infrarotstrahlern 162 zum Einsatz kommen, die sich in vertikaler Richtung erstrecken und die synchron zur Vorschubbewegung des Kantenmaterials 12 nacheinander angeschaltet und/oder abgeschaltet werden können. In ähnlicher Weise wie durch den Einsatz der Blende 152 kann durch die synchron zur Vorschubbewegung des Kantenmaterials 12 nacheinander abschaltbaren Infrarotstrahler 162 sichergestellt werden, dass überschüssiges Kantenmaterial praktisch nicht mit Infrarotstrahlung beaufschlagt wird. Ein Trennmesser 154 (in Figur 8 nicht dargestellt) kann in gleicher Weise wie bei der in Figur 7 schematisch dargestellten Ausgestaltung im Bereich zwischen der Bestrahlungseinrichtung 160 und dem Werkstück 14 angeordnet werden. Überschüssiges Kantenmaterial kann mittels des Trennmessers 154 abgetrennt und anschließend entgegen der Vorschubrichtung 34 aus der Strahlungsbeaufschlagungszone 76 herausgezogen werden, wobei das überschüssige Kantenmaterial nicht mit Infrarotstrahlung beaufschlagt wurde, da die Infrarotstrahler 162 bei Eintritt des überschüssigen Kantenmaterials in die Strahlungsbeaufschlagungszone 76 synchron zur Bewegung des Kantenmaterials abgeschaltet wurden. Das überschüssige Kantenmaterial kann somit zur Beschichtung der Schmalseite eines weiteren Werkstücks zum Einsatz kommen. Auch die in Figur 8 dargestellte vorteilhafte Ausführungsform der erfindungsgemäßen Vorrichtung zeichnet sich somit durch einen besonders geringen Verlust an Kantenmaterial aus. Beim Einführen von Kantenmaterial in die Strahlungsbeaufschlagungszone können die Infrarotstrahler 162 günstigerweise nacheinander synchron zur Vorschubbewegung des Kantenmaterials 12 eingeschaltet werden.

## Patentansprüche

1. Vorrichtung zum Fixieren eines band- oder streifenförmigen Kantenmaterials (12) an einer Schmalseite (18) eines plattenförmigen Werkstücks (14), wobei die Vorrichtung (10) eine Vorschubeinrichtung (24) zum Zuführen des Kantenmaterials (12) entlang eines Vorschubwegs zur Schmalseite (18) des Werkstücks (14) aufweist sowie mindestens einen Infrarotstrahler (46, 48; 162) zum Aktivieren einer dem Werkstück (14) zugewandten Haftschicht (20) des Kantenmaterials (12) und eine Anpresseinrichtung (36) zum Anpressen des Kantenmaterials (12) auf die Schmalseite (18) des Werkstücks (14), **dadurch gekennzeichnet, dass** im Vorschubweg des Kantenmaterials (12) eine Strahlungsbeaufschlagungszone (76) mit vorgebbarer Größe angeordnet ist, in der die Haftschicht (20) des Kantenmaterials (12) mit Infrarotstrahlung beaufschlagbar ist, und dass die Vorrichtung (10) eine Führungseinrichtung (78) aufweist zum Führen des Kantenmaterials (12) durch die Strahlungsbeaufschlagungszone (76) hindurch, wobei die Führungseinrichtung (78) mindestens ein Führungselement aufweist, das sich in Vorschubrichtung (34) entlang der Strahlungsbeaufschlagungszone (76) erstreckt, wobei das Kantenmaterial (12) entlang des mindestens einen Führungselements bewegbar ist, und wobei das mindestens eine Führungselement zumindest einen Kühlkanal (86, 88) für ein Kühlmedium aufweist.

2. Vorrichtung nach Anspruch 1, **dadurch gekennzeichnet, dass** die Größe der Strahlungsbeaufschlagungszone (76) veränderbar ist.

3. Vorrichtung nach Anspruch 1 oder 2, **dadurch gekennzeichnet, dass** das mindestens eine Führungselement das Kantenmaterial (12) linienförmig kontaktiert, wobei das mindestens eine Führungselement eine Kehlnut (90, 92) aufweist, die einen Randbereich des Kantenmaterials (12) aufnimmt.

4. Vorrichtung nach einem der voranstehenden Ansprüche, **dadurch gekennzeichnet, dass** das mindestens eine Führungselement als Führungsschiene (82, 84) ausgestaltet ist, die eine in Vorschubrichtung (34) des Kantenmaterials (12) ausgerichtete Begrenzung der Strahlungsbeaufschlagungszone (76) ausbildet.

5. Vorrichtung nach einem der voranstehenden Ansprüche, **dadurch gekennzeichnet, dass** die Führungseinrichtung (78) zwei im Abstand zueinander angeordnete Führungselemente aufweist, die sich entlang der Strahlungsbeaufschlagungszone (76) erstrecken, wobei das Kantenmaterial (12) zwischen die beiden Führungselemente einführbar und entlang der beiden Führungselemente bewegbar ist.

6. Vorrichtung nach Anspruch 5, **dadurch gekennzeichnet, dass** der Abstand zwischen den beiden Führungselementen veränderbar, insbesondere motorisch veränderbar ist.

7. Vorrichtung nach Anspruch 6, **dadurch gekennzeichnet, dass** zumindest eines der beiden Führungselemente an einem in vertikaler Richtung verschiebbaren Schlitten (108) gehalten ist.

8. Vorrichtung nach einem der voranstehenden Ansprüche, **dadurch gekennzeichnet, dass** die Strahlungsbeaufschlagungszone (76) auf ihrer dem mindestens einen Infrarotstrahler (46, 48; 162) abgewandten Seite von mindestens einem Absorberelement (80) begrenzt ist.

9. Vorrichtung nach Anspruch 8, **dadurch gekennzeichnet, dass** das Absorberelement (80) mindestens einen Kühlkanal (100) für ein Kühlmedium aufweist.

10. Vorrichtung nach Anspruch 8 oder 9, **dadurch gekennzeichnet, dass** an der der Strahlungsbeaufschlagungszone (76) abgewandten Rückseite des Absorberelements (80) eine Verstelleinrichtung gehalten ist zum Verstellen der Position eines Führungselements der Führungseinrichtung (78).

11. Vorrichtung nach einem der voranstehenden Ansprüche, **dadurch gekennzeichnet, dass** die Strahlungsbeaufschlagungszone (76) auf ihrer dem mindestens einen Infrarotstrahler (46, 48; 162) zugewandten Seite von einer Glasplatte (74) begrenzt ist.

12. Vorrichtung nach einem der voranstehenden Ansprüche, **dadurch gekennzeichnet, dass** an der der Strahlungsbeaufschlagungszone (76) abgewandten Rückseite des mindestens einen Infrarotstrahlers (46, 48) ein Reflektor (72) angeordnet ist.

13. Vorrichtung nach einem der voranstehenden Ansprüche, **dadurch gekennzeichnet, dass** zwischen dem mindestens einen Infrarotstrahler (46, 48) und der Strahlungsbeaufschlagungszone (76) mindestens ein optisches Bauelement (134, 136) zur Ablenkung, Fokussierung und/oder Aufweitung der von dem mindestens einen Infrarotstrahler (46, 48) emittierten Infrarotstrahlung angeordnet ist.

14. Vorrichtung nach einem der voranstehenden Ansprüche, **dadurch gekennzeichnet, dass** der mindestens eine Infrarotstrahler (46, 48) relativ zum Kantenmaterial (12) verstellbar gehalten ist.

15. Vorrichtung nach einem der voranstehenden Ansprüche, **dadurch gekennzeichnet, dass** das Kantenmaterial (12) dem Werkstück (14) kontinuierlich zuführbar ist und dass die Vorrichtung (10) ein Trennmesser (114) aufweist zum Abtrennen von Kantenmaterial, wobei das Trennmesser (114) von dem mindestens einen Infrarotstrahler (46, 48) mechanisch entkoppelt ist.

16. Vorrichtung nach einem der voranstehenden Ansprüche, **dadurch gekennzeichnet, dass** die Vorrichtung eine zwischen der Strahlungsbeaufschlagungszone (76) und dem mindestens einen Infrarotstrahler (46, 48) positionierbare Blende (152) aufweist, die zwischen einer Abdeckstellung und einer Freigabestellung hin und her bewegbar ist, insbesondere synchron zur Vorschubbewegung des Kantenmaterials (12) in Vorschubrichtung (34) bewegbar ist zum Schutz eines Kantenmaterialbereichs vor Infrarotstrahlung.

17. Vorrichtung nach einem der voranstehenden Ansprüche, **dadurch gekennzeichnet, dass** die Vorrichtung eine Vielzahl von Infrarotstrahlern (162) aufweist, die entlang des Vorschubwegs des Kantenmaterials (12) nebeneinander angeordnet und synchron zur Vorschubbewegung des Kantenmaterials (12) nacheinander an- und/oder abschaltbar sind.

18. Vorrichtung nach einem der voranstehenden Ansprüche, **dadurch gekennzeichnet, dass** die Intensität der von der mindestens einem Infrarotstrahler (46, 48; 162) emittierten Infrarotstrahlung steuerbar ist.

19. Vorrichtung nach einem der voranstehenden Ansprüche, **dadurch gekennzeichnet, dass** zumindest elektrische Anschlusskontakte (50, 52) des mindestens einen Infrarotstrahlers (46, 48; 162) von einem zwangsgeführten Kühlmedium kühlbar sind.

20. Vorrichtung nach einem der voranstehenden Ansprüche, **dadurch gekennzeichnet, dass** der mindestens eine Infrarotstrahler (46, 48; 162) in einem Gehäuse (58) angeordnet ist, das Kühlkanäle für ein Kühlmedium aufweist.

## Claims

1. Apparatus for fixing a band- or strip-shaped edge material (12) to a narrow side (18) of a plate-shaped workpiece (14), wherein the apparatus (10) comprises a feed device (24) for supplying the edge material (12) along a feed path to the narrow side (18) of the workpiece, (14) as well as at least one infrared emitter (46, 48; 162) for activating an adhesive layer (20), facing the workpiece (14), of the edge material (12), and a pressing device (36) for pressing the edge material (12) onto the narrow side (18) of the workpiece (14), **characterized in that** in the feed path of the edge material (12) is arranged a radiation exposure zone (76) having a specifiable size in which the adhesive layer (20) of the edge material (12) is exposable to infrared radiation, and **in that** the apparatus (10) comprises a guidance device (78) for guiding the edge material (12) through the radiation exposure zone (76), wherein the guidance device (78) comprises at least one guidance element that extends in a feed direction (34) along the radiation exposure zone (76), wherein the edge material (12) is movable along the at least one guidance element, and wherein the at least one guidance element comprises at least one cooling channel (86, 88) for a cooling medium.

2. Apparatus in accordance with Claim 1, **characterized in that** the size of the radiation exposure zone (76) is changeable.

3. Apparatus in accordance with either one of Claims 1 or 2, **characterized in that** the at least one guidance element linearly contacts the edge material (12), wherein the at least one guidance element comprises a fluted groove (90, 92) that accommodates an end region of the edge material (12).

4. Apparatus in accordance with any one of the preceding Claims, **characterized in that** the at least one guidance element is configured as a guidance rail (82, 84) that forms a boundary of the radiation exposure zone (76), which boundary is oriented in the feed direction (34) of the edge material (12).

5. Apparatus in accordance with any one of the preceding Claims, **characterized in that** the guidance device (78) comprises two guidance elements arranged at a distance from each other and extending along the radiation exposure zone (76), wherein the edge material (12) is introducible between the two guidance elements and is movable along the two guidance elements.

6. Apparatus in accordance with Claim 5, **characterized in that** the distance between the two guidance elements is changeable, in particular changeable in a motorized manner.

7. Apparatus in accordance with Claim 6, **characterized in that** at least one of the two guidance elements is held on a slide (108) which is displaceable in vertical direction.

8. Apparatus in accordance with any one of the preceding Claims, **characterized in that** the radiation exposure zone (76) is delimited by at least one absorber element (80) on its side which is remote from the at least one infrared emitter (46, 48; 162).

9. Apparatus in accordance with Claim 8, **characterized in that** the absorber element (80) comprises at least one cooling channel (100) for a cooling medium.

10. Apparatus in accordance with either one of Claims 8 or 9, **characterized in that** an adjustment device for adjusting the position of a guidance element of the guidance device (78) is held on the backside of the absorber element (80) which is remote from the radiation exposure zone (76).

11. Apparatus in accordance with any one of the preceding Claims, **characterized in that** the radiation exposure zone (76) is delimited by a glass plate (74) on its side facing the at least one infrared emitter (46, 48; 162).

12. Apparatus in accordance with any one of the preceding Claims, **characterized in that** a reflector (72) is arranged on the backside of the at least one infrared emitter (46, 48) which is remote from the radiation exposure zone (76).

13. Apparatus in accordance with any one of the preceding Claims, **characterized in that** at least one optical component (134, 136) is arranged between the at least one infrared emitter (46, 48) and the radiation exposure zone (76) for deflecting, focusing, and/or expanding the infrared radiation emitted by the at least one infrared emitter (46, 48).

14. Apparatus in accordance with any one of the preceding Claims, **characterized in that** the at least one infrared emitter (46, 48) is held adjustably relative to the edge material (12).

15. Apparatus in accordance with any one of the preceding Claims, **characterized in that** the edge material (12) is continually suppliable to the workpiece (14), and **in that** the apparatus (10) comprises a separating blade (114) for separating edge material, wherein the separating blade (114) is mechanically decoupled from the at least one infrared emitter (46, 48).

16. Apparatus in accordance with any one of the preceding Claims, **characterized in that** the apparatus comprises a screen which is positionable between the radiation exposure zone (76) and the at least one infrared emitter (46, 48), and which is movable back and forth between a covering position and a release position, and in particular is movable in the feed direction (34) synchronously with the feed motion of the edge material (12) for protecting an edge material region from infrared radiation.

17. Apparatus in accordance with any one of the preceding Claims, **characterized in that** the apparatus comprises a multitude of infrared emitters (162) that are arranged next to each other along the feed path of the edge material (12) and are able to be sequentially switched on and/or off synchronously with the feed motion of the edge material (12).

18. Apparatus in accordance with any one of the preceding Claims, **characterized in that** the intensity of the infrared radiation emitted by the at least one infrared emitter (46, 48; 162) is controllable.

19. Apparatus in accordance with any one of the preceding Claims, **characterized in that** at least electrical terminal contacts (50, 52) of the at least one infrared emitter (46, 48; 162) are coolable by a force-fed cooling medium.

20. Apparatus in accordance with any one of the preceding Claims, **characterized in that** the at least one infrared emitter (46, 48; 162) is arranged in a housing (58) that comprises cooling channels for a cooling medium.

## Revendications

1. Dispositif de fixation d'un matériau à arêtes (12) en forme de bande ou de ruban sur un petit côté (18) d'une pièce (14) en forme de plaque, le dispositif (10) comprenant un système d'avancement (24) destiné à amener le matériau à arêtes (12) le long d'un trajet d'avancement au petit côté (18) de la pièce (14) ainsi qu'au moins un émetteur infrarouge (46, 48 ; 162) destiné à activer une couche adhésive (20) du matériau à arêtes (12) tournée vers la pièce (14) et un système de pression (36) destiné à presser le matériau à arêtes (12) sur le petit côté (18) de la pièce (14), **caractérisé en ce qu'**une zone d'application de rayonnement (76) d'une taille pouvant être prédéfinie, dans laquelle un rayonnement infrarouge peut être appliqué sur la couche adhésive (20) du matériau à arêtes (12), est située dans le trajet d'avancement du matériau à arêtes (12), et **en ce que** le dispositif (10) comprend un système de guidage (78) destiné à guider le matériau à arêtes (12) à travers la zone d'application de rayonnement (76), le système de guidage (78) comprenant au moins un élément de guidage qui s'étend dans la direction d'avancement (34) le long de la zone d'application de rayonnement (76), le matériau à arêtes (12) pouvant se déplacer le long de l'élément ou des éléments de guidage, et l'élément ou les éléments de guidage comprenant au moins un canal de refroidissement (86, 88) pour un médium réfrigérant.

2. Dispositif selon la revendication 1, **caractérisé en ce que** la taille de la zone d'exposition à un rayonnement (76) peut être modifiée.

3. Dispositif selon la revendication 1 ou 2, **caractérisé en ce que** l'élément ou les éléments de guidage sont en contact de manière linéaire avec le matériau à arêtes (12), l'élément ou les éléments de guidage présentant une rainure formant gorge (90, 92) qui reçoit une zone marginale du matériau à arêtes (12).

4. Dispositif selon l'une quelconque des revendications précédentes, **caractérisé en ce que** l'élément ou les éléments de guidage sont réalisés sous la forme d'un rail de guidage (82, 84) qui forme une délimitation, orientée dans la direction d'avancement (34) du matériau à arêtes (12), de la zone d'application de rayonnement (76).

5. Dispositif selon l'une quelconque des revendications précédentes, **caractérisé en ce que** le système de guidage (78) comprend deux éléments de guidage agencés à distance l'un de l'autre, qui s'étendent le long de la zone d'application de rayonnement (76), le matériau à arêtes (12) pouvant être introduit entre les deux éléments de guidage et pouvant se déplacer le long des deux éléments de guidage.

6. Dispositif selon la revendication 5, **caractérisé en ce que** l'écart entre les deux éléments de guidage peut être modifié, en particulier être modifié de manière motorisée.

7. Dispositif selon la revendication 6, **caractérisé en ce qu'**au moins l'un des deux éléments de guidage est retenu sur un coulisseau (108) pouvant coulisser dans la direction verticale.

8. Dispositif selon l'une quelconque des revendications précédentes, **caractérisé en ce que** la zone d'application de rayonnement (76) est délimitée sur sa face opposée à l'émetteur ou aux émetteurs infrarouges (46, 48 ; 162) par au moins un élément absorbant (80).

9. Dispositif selon la revendication 8, **caractérisé en ce que** l'élément absorbant (80) comprend au moins un canal de refroidissement (100) pour un médium réfrigérant.

10. Dispositif selon la revendication 8 ou 9, **caractérisé en ce qu'**un système de réglage destiné à régler la position d'un élément de guidage du système de guidage (78) est retenu sur la face arrière de l'élément absorbant (80) opposée à la zone d'application de rayonnement (76).

11. Dispositif selon l'une quelconque des revendications précédentes, **caractérisé en ce que** la zone d'application de rayonnement (76) est délimitée sur sa face tournée vers l'émetteur ou les émetteurs infrarouges (46, 48 ; 162) par une plaque de verre (74).

12. Dispositif selon l'une quelconque des revendications précédentes, **caractérisé en ce qu'**un réflecteur (72) est agencé sur la face arrière de l'émetteur ou des émetteurs infrarouge (46, 48) opposée à la zone d'application de rayonnement (76).

13. Dispositif selon l'une quelconque des revendications précédentes, **caractérisé en ce qu'**au moins un composant optique (134, 136) destiné à dévier, à focaliser et/ou à élargir le rayonnement infrarouge émis par l'émetteur ou les émetteurs infrarouges (46, 48) est agencé entre l'émetteur ou les émetteurs infrarouges (46, 48) et la zone d'application de rayonnement (76).

14. Dispositif selon l'une quelconque des revendications précédentes, **caractérisé en ce que** l'émetteur ou les émetteurs infrarouges (46, 48) sont retenus de manière réglable par rapport au matériau à arêtes (12).

15. Dispositif selon l'une quelconque des revendications précédentes, **caractérisé en ce que** le matériau à arêtes (12) peut être amené en continu à la pièce (14) et **en ce que** le dispositif (10) présente une lame de séparation (114) destinée à séparer le matériau à arêtes, la lame de séparation (114) étant découplée mécaniquement de l'émetteur ou des émetteurs infrarouges (46, 48).

16. Dispositif selon l'une quelconque des revendications précédentes, **caractérisé en ce que** le dispositif comprend un cache (152) qui peut être positionné entre la zone d'application de rayonnement (76) et l'émetteur ou les émetteurs infrarouges (46, 48) et qui peut se déplacer en va-et-vient entre une position de recouvrement et une position de libération, en particulier de manière synchrone avec le mouvement d'avancement du matériau à arêtes (12) dans la direction d'avancement (34), pour protéger une zone de matériau à arêtes du rayonnement infrarouge.

17. Dispositif selon l'une quelconque des revendications précédentes, **caractérisé en ce que** le dispositif comprend une pluralité d'émetteurs infrarouges (162), qui sont juxtaposés le long du trajet d'avancement du matériau à arêtes (12) et qui peuvent être activés et/ou désactivés les uns après les autres de manière synchrone avec le mouvement d'avancement du matériau à arêtes (12).

18. Dispositif selon l'une quelconque des revendications précédentes, **caractérisé en ce que** l'intensité du rayonnement infrarouge émis par l'émetteur ou les émetteurs infrarouges (46, 48 ; 162) peut être commandée.

19. Dispositif selon l'une quelconque des revendications précédentes, **caractérisé en ce qu'**au moins un des contacts de connexion électriques (50, 52) de l'émetteur ou des émetteurs infrarouges (46, 48 ; 162) peuvent être refroidis par un médium réfrigérant à circulation forcée.

20. Dispositif selon l'une quelconque des revendications précédentes, **caractérisé en ce que** l'émetteur ou les émetteurs infrarouges (46, 48 ; 162) sont agencés dans un logement (58) qui comporte des canaux de refroidissement pour un médium réfrigérant.
